# EUROPEAN PATENT SPECIFICATION

(11) **EP 3 994 073 B1**
(45) Date of publication and mention of the grant of the patent: **10.07.2024**
(21) Application number: 20835415.9
(22) Date of filing: 05.05.2020
(51) Int. Cl.: B65D 43/12, B25H 3/02, B65D 1/22, B65D 21/032, B65D 21/02, B65D 43/02, B65D 81/26, B65D 25/28, B65D 25/00, B62B 3/00

(54) **A CASE FOR STORING ARTICLES AND CARRYING ARTICLES BY HAND**
BEHÄLTER ZUM AUFBEWAHREN VON GEGENSTÄNDEN UND MANUELLEN TRAGEN VON ARTIKELN
BOÎTE POUR STOCKER DES ARTICLES ET TRANSPORTER DES ARTICLES À LA MAIN

(30) Priority: 04.07.2019 NO 20190842
(43) Date of publication of application: 11.05.2022
(73) Proprietor: Hofstad, Stein, 7052 Trondheim (NO)
(72) Inventor: Hofstad, Stein, 7052 Trondheim (NO)
(74) Representative: Curo AS
(86) International application number: PCT/NO2020/050114
(87) International publication number: WO 2021/002756

(56) References cited:
- WO-A1-2015/122774
- CN-U- 201 864 160
- CN-U- 201 864 160
- DE-A1- 3 436 250
- DE-C- 811 813
- DE-C- 811 813
- DE-U1- 202013 002 265
- JP-B2- 4 256 272
- NO-A1- 20 162 005
- NO-A1- 20 162 005
- NO-A1- 20 180 816
- US-A- 5 299 711
- US-A1- 2005 224 384

## Description

The present invention is related to a case for storing articles and carrying articles by hand, according to the preamble of claim 1.

### Background

The present invention is particularly related to a case for storing articles therein in a secure and stable manner, particularly in combination with a rack system or in a stacked configuration.

The invention is an improvement of a case and an accompanying rack system, particularly arranged to be stored in a compact manner in a container.

An example from the prior art can be found in NO 20162005 to the same inventor as the present one.

### Object

An object of the present invention is to provide an improved portable case for storing articles to provide a case which is more secure against theft of tampering of articles accommodated in a case. Another object of the present invention is to provide an improved case for storing articles to provide a case which can provide a more stable stack of numerous cases.

### The invention

The objects above are achieved by a case according to claim 1. Additional advantageous features appear from the dependent claims.

### Definitions

The term "box" is in this context meant to include a portable box or case, intended for storage or transport of items accommodated therein. The term is used interchangeably with the term "case".

The terms "horizontal" and "vertical" are meant to describe details of the case while positioned on a horizontal surface with its lid extending in the horizontal direction.

### General description

The invention concerns a case for storing articles and carrying articles by hand. The case comprises:
a square or rectangular container having a front end wall, a rear end wall, a first side wall, a second side wall and a bottom,
a lid having a level surface, two mutual parallel side edges, a rear end edge and a front side opposite the rear end edge, wherein
the lid further comprises first and second locking tabs, arranged to establish a releasable locking engagement between the lid and the container, extending substantially perpendicular to the surface at a distance shorter than the height of the container, thus defining an asymmetric shape, said tabs exhibiting a grip and a hole for a locking strip, and
said side edges exhibiting numerous guide and stop ridges distanced evenly along the respective side edges and exhibiting a length shorter than a space between lid guide protrusions distributed evenly along an inner side of first and second side walls.

The case further exhibits an upper rim of the walls having a lid guiding groove defined by an outer vertically extending outer wall, an inner ridge and a horizontal guiding surface located between outer wall and inner ridge, arranged to serve as guiding means for the lid and to lock the lid by establishing engagement between inner ridge and guide and stop ridges, with lid and container in an assembled configuration, located between guiding surface and lid guide protrusions.

The rear end edge of the lid can be provided with one or more ridges extending substantially perpendicular to, and up from the surface in a direction opposite of said first and second locking tabs, arranged to stabilize the lid when inserted in container and to prevent humidity from entering the internal of case.

The lid with its asymmetric shape can be turned upside down and inserted into engagement in guiding surface, with the ridge at the rear end edge extending into lid guiding groove, in a locking engagement with inner ridge of lid guiding groove, thus in an assembled configuration exposing an access opening between lid and container.

The case of any one of the claims above, wherein the bottom of the container exhibits a stacking recess formed of a through recess in the bottom at a distance from the rear end wall which is shorter than the distance from the opposite front end wall, said recess extending from first side wall to second side wall, in a direction perpendicular to the same, terminated in an angular recess in the bottom at the first side wall and a similar angular recess at the second end wall. The recesses are arranged to accommodate an upper edge of the rear end wall and corners between the first and second side walls and the rear end wall, of a stacked second container arranged underneath, thus forming a stable staircase-like stack of numerous containers.

The grip part of the respective tab is advantageously provided with a locking strip recess, arranged to accommodate a locking strip and prevent the same from being slid out of locking engagement between the lid and the container.

The lid can be arranged to be mounted upside down in lid guiding groove, thus leaving an open space in the front of the case which provides access to its content in a stacked configuration.

A stacking recess can be formed in the bottom of the container, e.g. at the front wall of the container, and a corresponding stacking notch in the upper edges of first and second side walls, respectively, arranged to establish a releasable engagement between stacking notch in a first container and stacking recess of a second container stacked directly upon the first container.

### Detailed description

The invention is described in further details below with reference to drawings, where
Fig. 1A is a perspective view of a box in accordance with the invention,
Fig. 1B is a perspective view similar to Fig. 1 in a position ready to be opened,
Fig. 2A is a view similar to Figs. 1 and 2 but where the lid is lifted in a first direction,
Fig. 2B is a view similar to Fig. 2A but where the lid is lifted in a second direction,
Fig. 3A is a perspective view of an upper rear part of the container without lid,
Fig. 3B is a view similar to Fig. 3A but with a lid arranged in engagement with the container,
Fig. 4A is a perspective view of a part of the top side of the lid,
Fig. 4B is a view similar to Fig. 4A but of the underside of the lid,
Fig. 5 is a cross-section of the container along a line extending along a first and second side of the case,
Fig. 6 is a view of the bottom of the box,
Figs. 7A and 7B are perspective views of numerous boxes in a stacked arrangement,
Fig. 8A is a perspective view of the underside of the rear part of one locking tab of the lid,
Fig. 8B is a view similar to Fig. 8A but viewed from the front of the same,
Fig. 9 is a perspective view of a part of the front end of the container,
Fig. 10A is a perspective view of a case where the lid has been turned upside down and inserted into a fixed position in the container part of the case,
Fig. 10B is a view similar to Fig. 10A but where a second case has been stacked upon the case shown inn Fig. 10A,
Fig. 11 is a perspective view of rack for storing numerous cases in accordance with the invention, and
Fig. 12 is a perspective view of a storage wagon for use with the rack illustrated in Fig. 11.

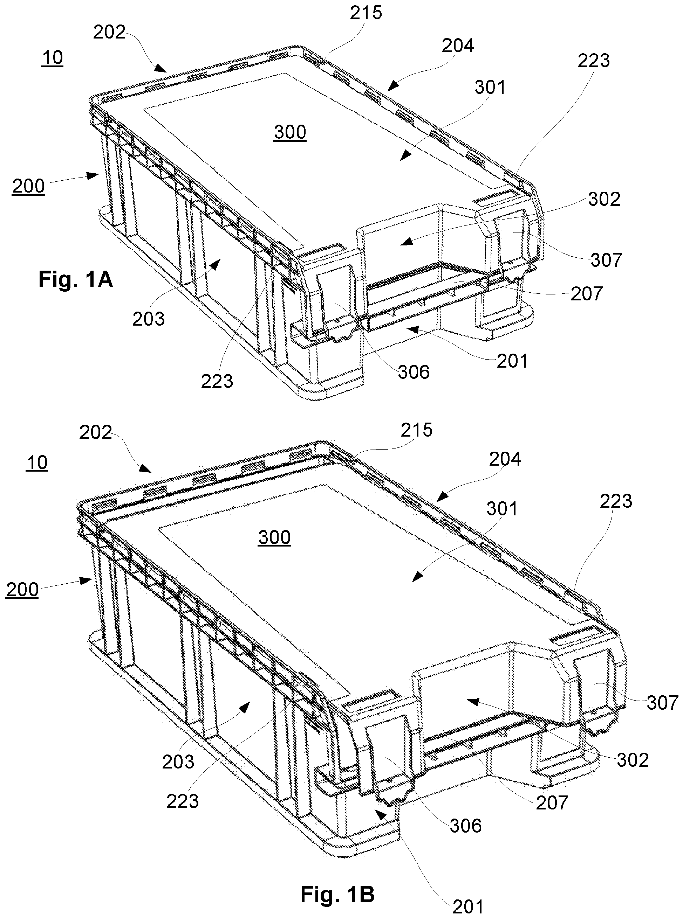

Now referring to Fig. 1A, a box or case is illustrated in perspective view in a closed mode, identified by reference numeral 10. The case 10 comprises a container 200 and a lid 300, preferably of a transparent substantially rigid plastic material. The container 200 exhibits a bottom 206, where a front end wall 201, a rear end wall 202, and a first and second side wall 203, 204 respectively, are extending perpendicularly (upwardly) from the bottom 206. The front end wall 201 is provided with a cross bar serving as a handle 207, arranged to extract or insert the case 10 from/into a rack (described further down), and arranged to carry the case 10 by hand.

Moreover, the lid 300, having a substantially level cover surface 301, exhibits a first and second locking tab 306, 307, arranged to establish a releasable engagement with the front end wall 201, and first and second side edges 304 and 305 extending in parallel with each other and constituting a part of the periphery of lid 300. The locking tabs 306 and 307, located near the respective side edges 304 and 305 at front lid end 302 of lid 300, extend in a direction downwards as shown in Figs. 1A and 1B to a distance substantially halfway between the top and bottom of the container. Hence, the lid 300 exhibits an asymmetric shape when viewed from either of side edges 304 and 305. More details of the locking tabs 306 and 307 are described below. A support notch 215 is formed in the upper edge of the first and second side wall 205, 206 at the rear end wall 202, arranged to engage with a part of a surrounding stack accommodating numerous boxes. A stacking recess 222 is formed in the bottom 206 of the case 200, here arranged at the front of the case 10, and a corresponding stacking notch 223 in the upper edges of first and second side walls 203 and 204, respectively.

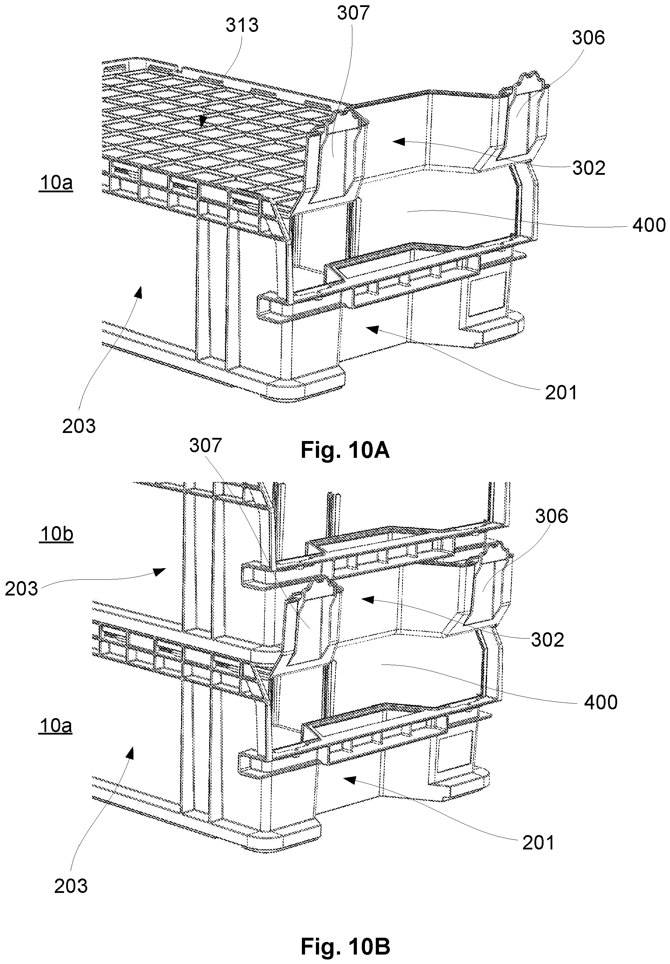

Accordingly, in a stacked configuration where one case is stacked directly upon another case (Fig. 10B), stacking notch 223 in a first case engages with recess 222 in the bottom of a second case.

Fig. 1B is an illustration similar to Fig. 1A, but where the lid 300 has been partly released from its engagement with the first side wall 205 off the container part 200, in a position ready to be lifted away container part 200.

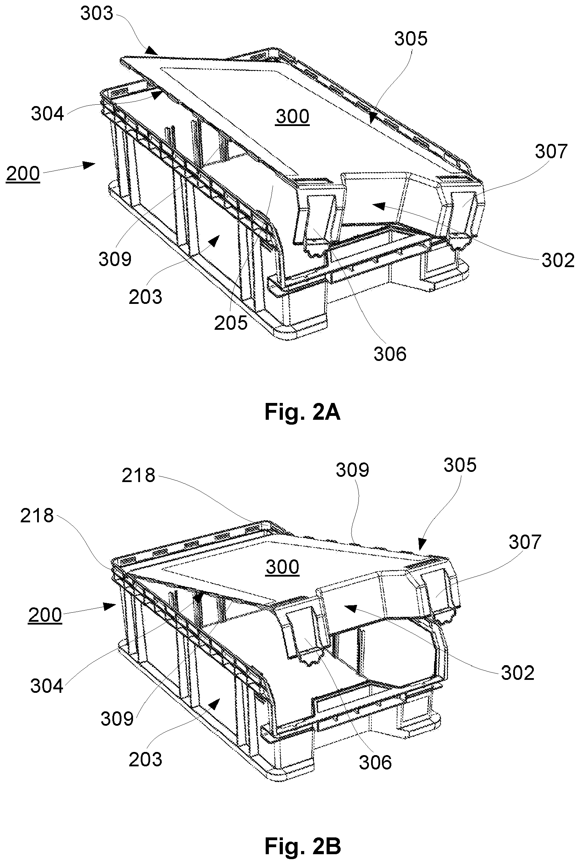

Fig. 2A illustrates one mode of releasing the id 300 from the container 200, where a first side edge 304 of the lid 300 has been partly lifted out from first side wall 203. Fig. 2B illustrates a second mode of releasing the lid from the container 200, where the front lid end 302 has been lifted out of engagement with container 200.

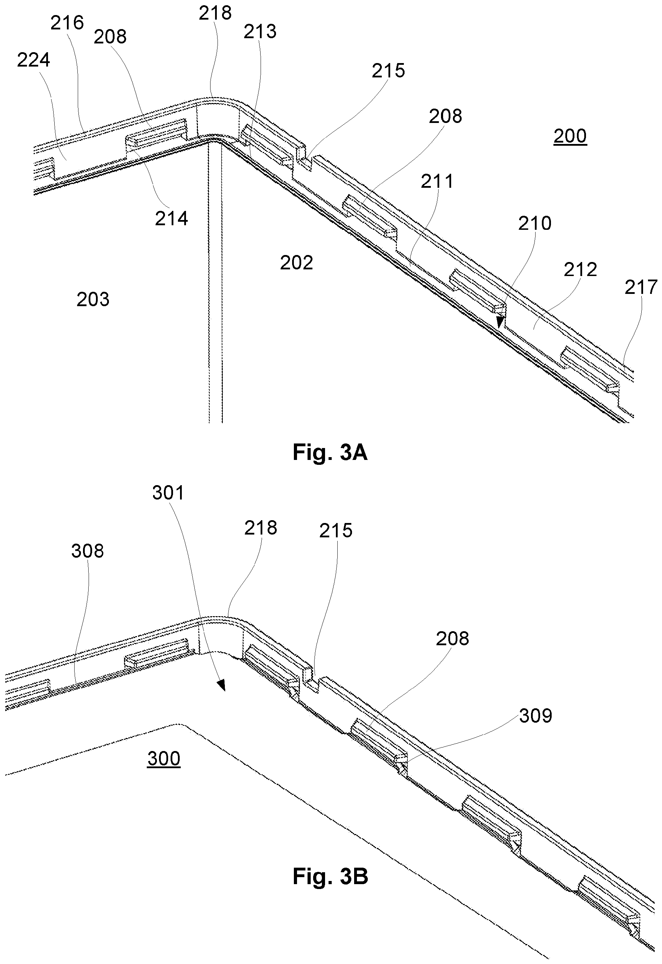

However, the lid 300 can also be released completely from a fixed position with container part 200 by completing a pulling operation which has been initiated as shown in Fig. 1B. The lifting modes shown in Figs. 2A and 2B requires that guide and stop ridges 309 on first and second side edges 304, 305 are located in a free space 224 between adjacent lid guide protrusions 208 on inner lid guide wall 212 (Figs. 3A and 3B), free to be lifted out of the container 200.

Fig. 3A is a perspective view of the upper rear container part 200 of the box 10 where the lid 300 has been removed. The upper rim or edge of the walls 202, 203, 204 extending perpendicularly up from the container bottom 205, here illustrated by upper edge 216 of first side wall and upper edge 217 of rear end wall, are provided with a lid guiding groove 210. The lid guiding groove 210 is provided in the form of a continuous recess along the upper rim of the walls 202, 203, 204, facing the internal part of the case 10. The continuous recess is defined by a horizontal guiding surface 211, an outer vertically extending outer wall 212, and an inner ridge 213. Accordingly, guiding surface 211 is recessed with respect to outer wall 212 and lid guiding groove ridge 213 and is located between outer groove wall 212 and inner ridge 213, in fluid communication with numerous drainage apertures 214 provided in outer wall 212. Thanks to inner ridge 213 and drainage apertures 214, the lid guiding groove 210 prevents fluid from entering the internal of the case 10 and subjecting articles therein to damage. Moreover, the guiding surface 211 extending along first and second side walls 203 and 204 serves as a guiding means for the lid 300 during insertion or extraction of the same with respect to container 200. Moreover, a number of horizontally extending discrete protrusions 208 are distributed evenly in the horizontal direction along outer lid guiding groove wall 212 and extending horizontally from the same a small distance into the internal part of container 200, at a position elevated from lid guiding surface 211.

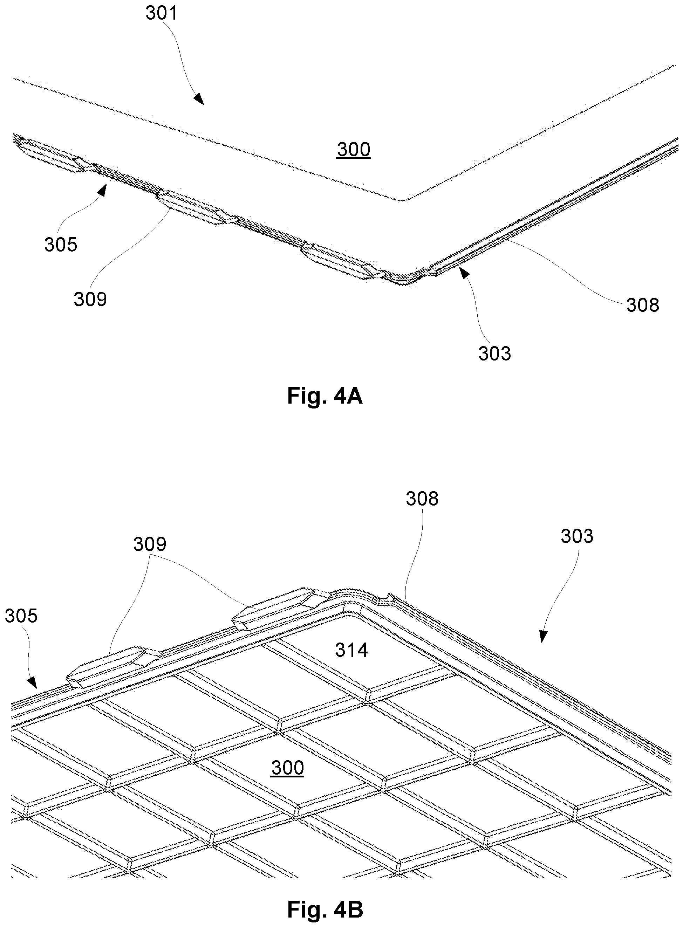

Figs. 4A and 4B are perspective views of a part of the lid 300 at the corner area between second side edge 305 and rear edge 303, where Fig. 4A is a top view and Fig. 4B is a bottom view. The side edges 304 and 305 (only one shown) are provided with numerous elongate guide and stop ridges 309, distanced evenly along the respective side edges 305 and 306, defining a space there between, and protruding out from the side edges thus producing an extension of the same. The length extension of guide and stop ridge 309 along the adjacent side ridge is shorter than the free space 224 between adjacent lid guide protrusions 208 on inner lid guide wall 209. Accordingly, when respective guide and stop ridges 309 are located directly opposite free space 224, the lid 300 can be tilted, lifted or lowered freely with guide and stop ridges 309 moving freely in free space 224. In a locked mode, the lid 300 is resting in lid guiding groove 210 and with its guide and stop ridges 309 locked underneath their mating lid guide protrusions 208. This is illustrated in Fig. 3B. It should also be added that the guide and stop ridges 309 are wedge shaped to simplify insertion and extraction of the lid 300 in and out of the container 200.

Still with reference to Figs. 4A and 4B, the rear end edge 303 is provided with a substantially vertically extending ridge 308, extending in a direction upwards from a substantially level cover surface 301 of lid 300. An advantageous effect of this ridge 308 is described below in connection with Figs. 10A and 10B.

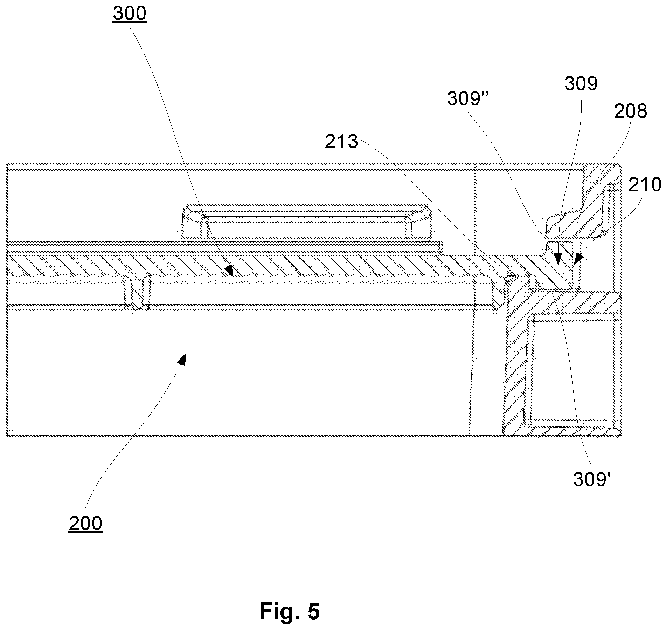

Fig. 5 illustrates a cross-section through the case 10 taken along a line extending between first side wall 203 and second side wall 204, in a direction perpendicular to the same, and through a guide and stop ridge 309 of lid 300. As can be seen in Fig. 5, guide and stop ridge 309 is formed with an optional tongue 309', extending in a direction downward from cover surface 301. It should be noted that the term "downward" here refers to the mode of use illustrated in Fig. 1A. An optional upper tongue is indicated at 309", extending in a direction opposite to tongue 309'. Moreover, the guide and stop ridge 309 of lid 300 is locked in lid guiding groove 210 with its tongue 309' in engagement with inner ridge 213 of lid guiding groove 210. The uppertongue 309" is here illustrated in abutment with an underside of lid guide protrusion 208. Accordingly, the arrangement shown in Fig. 5 prevents the lid from being lifted out of its position in engagement with container 200. It also prevents the first and second side walls 203 and 204 to be torn apart from each other which otherwise would allow the lid to be lifted out of engagement with the container and expose the content to theft or tampering.

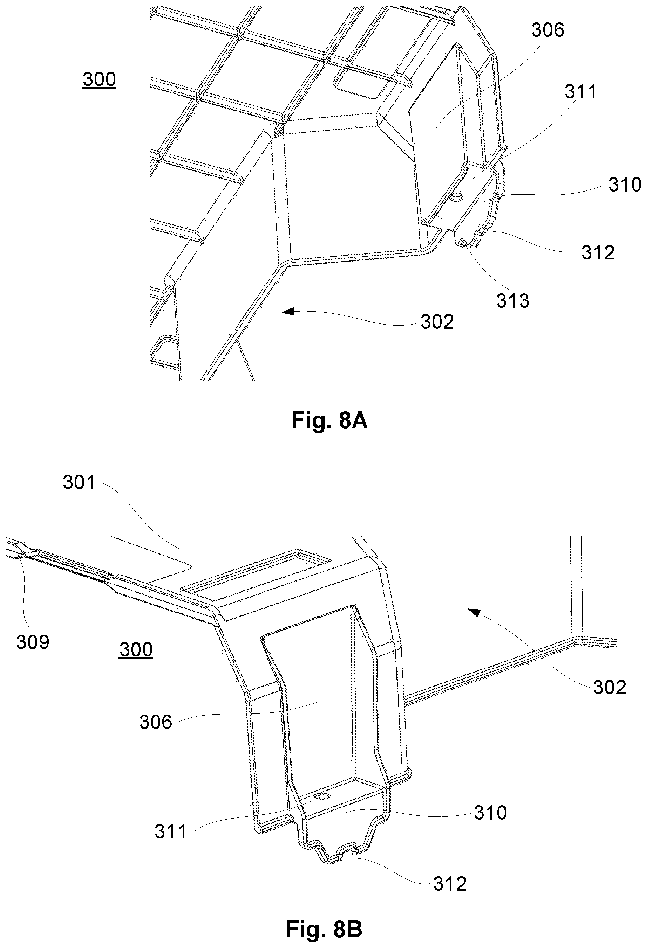

Now with reference to Figs. 8A and 8B, the lid 300 is provided with a first and second tab 306 and 307, of which only one is shown (306), serving as a grip for retracting or inserting the lid from/into the container part 200 of case 10 and front lock to maintain engagement between lid 300 and container 200. The respective tab is at its lower end provided with a grip 310 which allows a user to bring the tab out of engagement with upper end of front end wall 201 of container 200 by a locking tongue 313 at the lower end of the respective locking tabs 306 and 307.

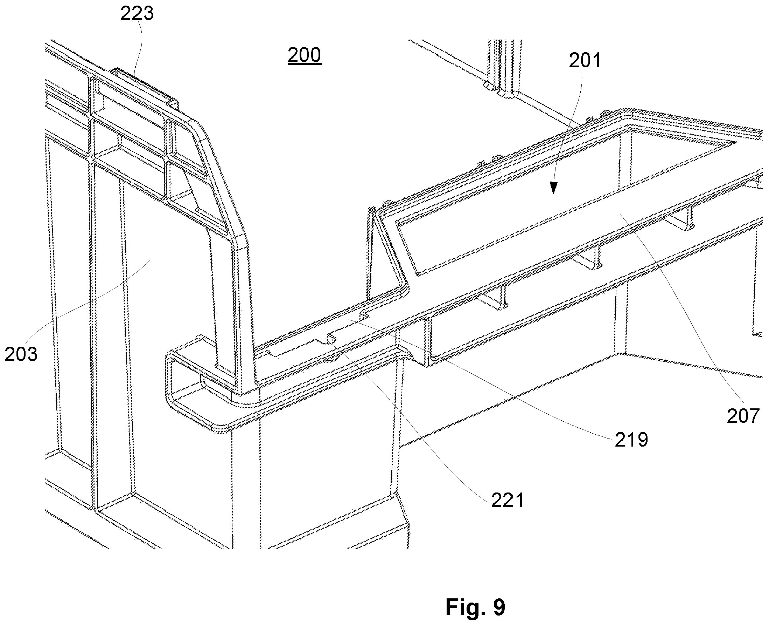

The respective locking tab 306 and 307 is further provided with an additional locking means that enables a user to prevent theft or tampering of content accommodated inside the box 10. The locking means is provided in the form of a through hole 311 in alignment with a hole 221 through a mating upper part of front end wall 201 of container 200 (Fig. 9), arranged to accommodate a strip (not shown). The grip 310 is in a preferred embodiment provided with a locking strip recess 312, at the lower end of the grip 310, arranged to accommodate a strip and prevent the same from being slid out of locking position. As shown in Fig. 9, a locking groove 219 is provided in a lid support surface the upper end of the front end wall 201, arranged to accommodate the locking tongue 313 of the respective tab 306 and 307, hence establishing a releasable engagement between tabs 306 and 307 and container 200.

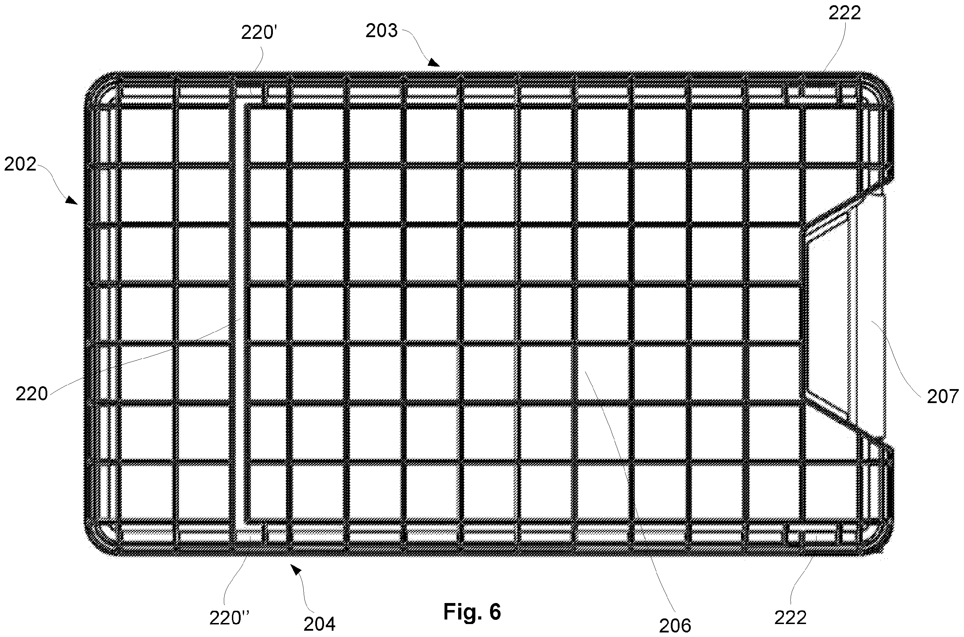

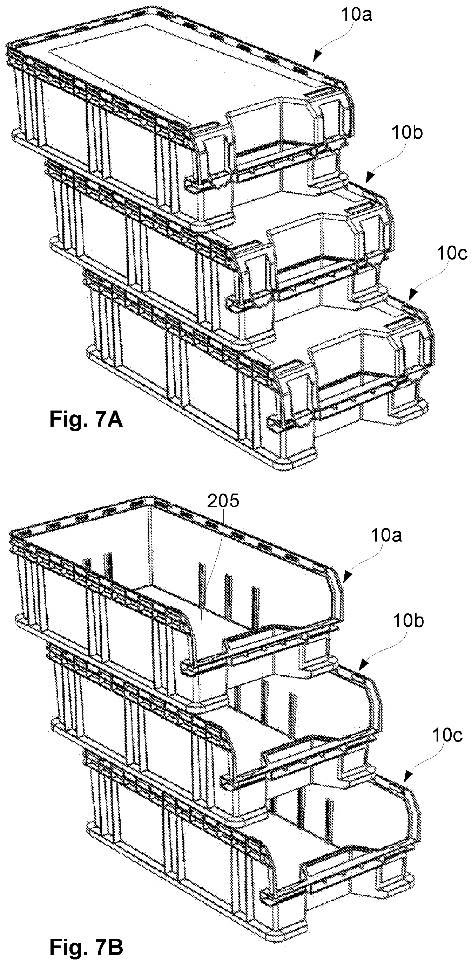

Now with reference to Fig. 6, the bottom 206 of the container 200 at the rear end wall 202 is shown. A stacking recess 220 is formed of a through recess in bottom 206 across the container 200, extending from first side wall 203 to the second side wall 204 of container 200, in a direction perpendicular to the side walls, terminated in an angular recess 200' at the first side wall 203 and a similar angular recess 220" at the second side wall 204. The recesses 220, 220', 220" are arranged to accommodate the upper edge 217 of the rear end wall 202 of container 200 and the respective corners 218 (Figs. 2B, 3A and 3B) between the side walls 203 and 204 and the rear end wall 202 (Fig. 3A) in a staircase-like stacked configuration, as illustrated in Figs. 7A and 7B which shows three boxes 10a-c and containers 200a-c, respectively, arranged on top of each other in a displaced mutual position. This stepped arrangement of boxes in accordance with the invention provides improved access to the content of the cases compared to cases stacked directly on top of each other.

It should also be appreciated that the lid 300 can be turned upside down and inserted with its tabs 306 and 307 extending upwards, which leaves an opening 400 that provides access to the content of the case 10. This arrangement of the case according to the invention is shown in Figs. 10A and 10B. In this way, numerous cases 10 can be arranged together in for example a staircase-like stacked configuration as shown in Figs. 7A and 7B, or in a configuration with containers stacked directly on top of each other as shown in Fig. 10B, in a situation where continuous access to the box contents is desirable. In this configuration, the ridge 308 at the rear end edge 303 extends into lid guiding groove 210, in a releasable locking engagement with inner ridge 213 of lid guiding groove 210, thus preventing the lid 300 from being unintentionally displaced when stacked with numerous other cases.

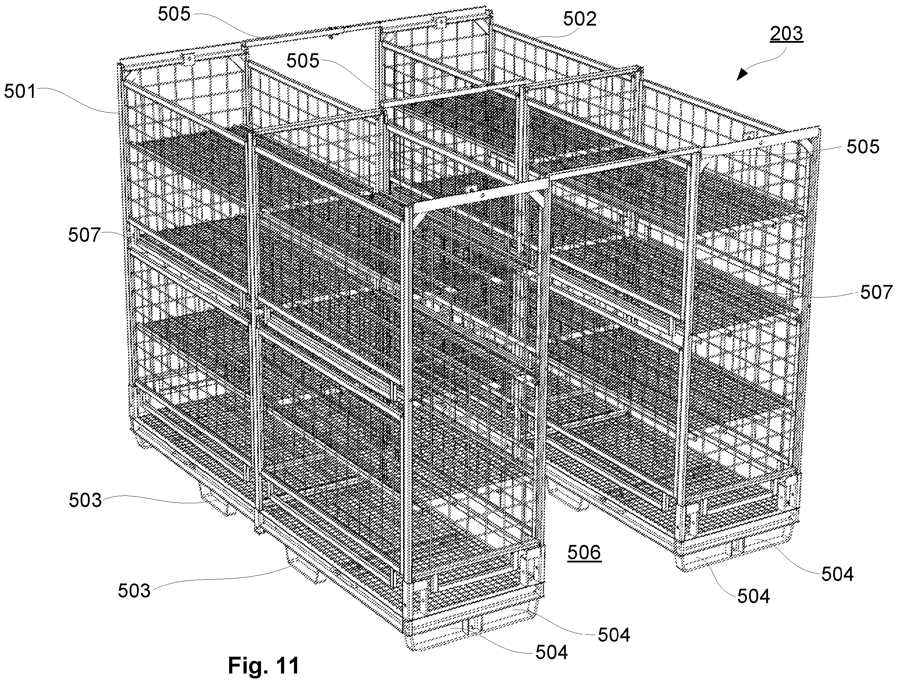

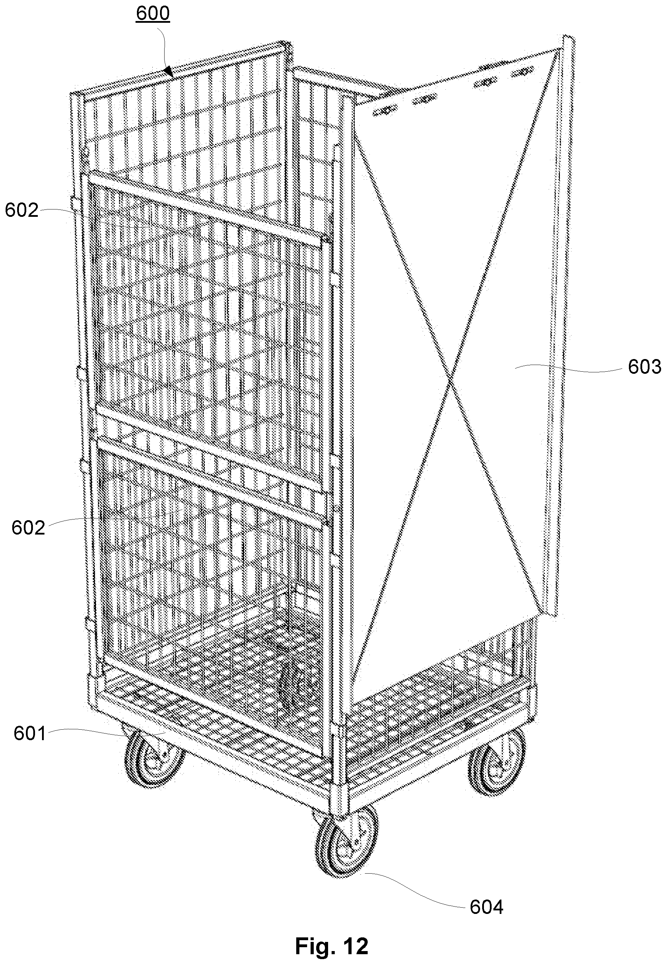

Fig. 11 illustrates a rack for storing numerous cases 10 as described above. The rack comprises a first rack part 501 and a second rack part 502 interconnected by numerous interconnecting struts 505 at the top of the respective rack parts 501 and 502. First and second rack part 501 and 502, respectively are arranged at a mutual distance, thus forming a storage space 506 for a storage wagon 600 (Fig. 12). Moreover, first and second rack parts 501 and 502 are provided with numerous shelves 507, arranged to accommodate numerous cases 10 (not illustrated). Fork pockets 503 for a fork lift is at one side provided in the bottom of the respective rack parts 501, 502, whereas fork pockets 504 for a hand pallet truck is arranged in the bottom of the respective rack parts 501, 502 at an adjacent side of the respective rack part 501, 502 that exhibits the fork pockets 503.

The storage wagon is illustrated in Fig. 12 at reference numeral 600. The wagon 600 exhibits a bottom 601, wheels 604, detachable walls 602, a detachable ramp 603 arranged to be positioned on the ground when moving the wagon 600 in or out of a container (not shown) which accommodates the rack 500.

### Reference numerals

- 10: Box/case
- 200: Container
- 201: Front end wall
- 202: Rear end wall
- 203: First side wall
- 204: Second side wall
- 205: Container bottom (inner)
- 206: Container bottom (outer)
- 207: Case handle
- 208: Lid guide protrusion
- 209: Inner lid guide wall
- 210: lid guiding groove
- 211: lid guiding surface
- 212: outer groove wall
- 213: inner ridge
- 214: drainage aperture
- 215: support notch (for rack)
- 216: upper edge of first side wall
- 217: upper edge of rear end wall
- 218: first corner of rear end wall
- 219: locking groove (for locking tab)
- 220: stacking recess
- 220': first corner reception of stacking recess
- 220": second corner reception of stacking recess
- 221: locking strips hole (front end of box)
- 222: Stacking recess
- 223: Stacking notch
- 224: Free space

- 300: Lid
- 301: Cover surface
- 302: Front lid end
- 303: Rear lid edge
- 304: First lid side edge
- 305: Second lid side edge
- 306: First locking tab
- 307: Second locking tab
- 308: Rear lid ridge
- 309: Guide and stop ridge
- 309': Tongue of guide and stop ridge
- 309": Upper tongue of guide and stop ridge
- 310: Grip
- 311: Hole for locking strip
- 312: Strip locking recess
- 313: Locking tongue
- 314: Lower lid surface

- 400: Access opening

- 500: Rack for storing cases
- 501: First rack part
- 502: Second rack part
- 503: Fork pockets for fork lift
- 504: Fork pockets for hand pallet truck
- 505: Interconnecting struts for first and second rack part
- 506: Storage space for storage wagon
- 507: Storage shelf

- 600: Storage wagon
- 601: Bottom
- 602: Detachable walls
- 603: Ramp
- 604: Wheel

## Claims

1. A case (10) for storing articles and carrying articles by hand, said case (10) comprising
a square or rectangular container (200) having a front-end wall (201), a rear end wall (202), a first side wall (203), a second side wall (204) and a bottom (206), wherein the container (200) exhibits a handle (207),
a lid (300) having a level surface (301), two mutual parallel side edges (304, 305), a rear end edge (303) and a front side (302) opposite the rear end edge (303), wherein
the lid (300) further comprises first and second locking tabs (306, 307), arranged to establish a releasable locking engagement between the lid (300) and the container (200), extending substantially perpendicular to the surface (301) at a distance shorter than the height of the container (200), thus defining an asymmetric shape, said tabs (306, 307) exhibiting a grip (310) and a hole (311) for a locking strip,
said side edges (304, 305) exhibiting numerous guide and stop ridges (309) distanced evenly along the respective side edges (305, 306) and exhibiting a length shorter than a space between lid guide protrusions (208) distributed evenly along an inner side of first and second side walls (203, 204),
**characterized in that** an upper rim of the rear end wall (202), the first side wall (203) and the second side wall (204), exhibits a lid guiding groove (210) defined by an outer vertically extending outer wall (212) to the inner side of which said lid guide protrusions (208) are formed, an inner ridge (213) and a horizontal guiding surface (211) located between outer wall (212) and inner ridge (213), arranged to serve as guiding means for the lid (300) and to lock the lid (300) by establishing engagement between inner ridge (213) and guide and stop ridges (309), wherein the lid (300) in an assembled configuration together with the container (200), is located between the guiding surface (211) and the lid guide protrusions (208).

2. The case of claim 1, wherein the rear end edge (303) of the lid (300) is provided with one or more ridges (308) extending substantially perpendicular to, and up from the surface (301) in a direction opposite of said first and second locking tabs (306, 307), arranged to stabilize the lid (300) when inserted in container (200) and to prevent humidity from entering the internal of case (10).

3. The case of claim 2, wherein the lid (300) with its asymmetric shape is arranged to be turned upside down and inserted into engagement in guiding surface (211), with the ridge (308) at the rear end edge (303) extending into lid guiding groove (210), in a locking engagement with inner ridge (213) of lid guiding groove (210), thus in an assembled configuration exposing an access opening (400) between lid (300) and container (200).

4. The case of any one of the claims above, wherein the bottom (206) of the container (200) exhibits a stacking recess (220, 220', 220") formed of a through recess in the bottom (206) at a distance from the rear end wall (202) which is shorter than the distance from the opposite front end wall (201), said recess (220, 220', 220") extending from first side wall (203) to second side wall (204), in a direction perpendicular to the same, terminated in an angular recess (220') in the bottom (206) at the first side wall (203) and a similar angular recess (220") at the second end wall (204), said recesses (220, 220', 220") being arranged to accommodate an upper edge (217) of the rear end wall (202) and corners (218) between the first and second side walls (203, 204) and the rear end wall (202), of a stacked second container (200c) arranged underneath, thus forming a stable staircase-like stack of numerous cases (10a, 10b, 10c) or containers (200a, 200b, 200c), respectively.

5. The case of any one of the claims above, wherein the grip (310) part of the respective tab (306, 307) is provided with a locking strip recess (312), arranged to accommodate a locking strip and prevent the same from being slid out of locking engagement between the lid (300) and the container (200).

6. The case of any one of the claims above, wherein the lid (300) is arranged to be mounted upside down in lid guiding groove (210), thus leaving an open space (400) in the front of the case (10) which provides access to its content in a stacked configuration.

7. The case of any one of the claims above, wherein a stacking recess (222) is formed in the bottom (206) of the container (200), here arranged at the front of container (200), and a corresponding stacking notch (223) in the upper edges of first and second side walls (203, 204), respectively, arranged to establish a releasable engagement between stacking notch (223) in a first container and stacking recess (222) of a second container (200) stacked directly upon the first container.

## Patentansprüche

1. Kiste (10) zum Aufbewahren von Gegenständen und zum Tragen von Gegenständen per Hand, wobei die Kiste (10) umfasst
einen quadratischen oder rechteckigen Behälter (200), der eine vordere Endwand (201), eine hintere Endwand (202), eine erste Seitenwand (203), eine zweite Seitenwand (204) und einen Boden (206) aufweist, wobei der Behälter (200) einen Griff (207) aufweist,
einen Deckel (300), der eine ebene Oberfläche (301), zwei zueinander parallele Seitenkanten (304, 305), eine hintere Endkante (303) und eine Vorderseite (302) gegenüber der hinteren Endkante (303) aufweist, wobei
der Deckel (300) ferner eine erste und eine zweite Verschlusslasche (306, 307) umfasst, die eingerichtet sind, um einen lösbaren Verschlusseingriff zwischen dem Deckel (300) und dem Behälter (200) herzustellen, wobei sie sich im Wesentlichen rechtwinklig zu der Oberfläche (301) in einem Abstand, der kleiner als die Höhe des Behälters (200) ist, erstrecken, wodurch sie eine asymmetrische Form definieren, wobei die Laschen (306, 307) einen Handgriff (310) und ein Loch (311) für einen Verschlussstreifen aufweisen,
wobei die Seitenkanten (304, 305) zahlreiche Führungs- und Anschlagsrippen (309) aufweisen, die entlang der jeweiligen Seitenkanten (305, 306) gleichmäßig beabstandet sind und eine Länge aufweisen, die kleiner als ein Zwischenraum zwischen Deckelführungsvorsprüngen (208) ist, die entlang einer Innenseite der ersten und der zweiten Seitenwand (203, 204) gleichmäßig verteilt sind,
**dadurch gekennzeichnet, dass** ein oberer Rand der hinteren Endwand (202), der ersten Seitenwand (203) und der zweiten Seitenwand (204) eine Deckelführungsnut (210), die durch eine äußere, sich vertikal erstreckende Außenwand (212) definiert ist, an der Innenseite derselben die Deckelführungsvorsprünge (208) gebildet sind, eine Innenrippe (213) und eine horizontale Führungsfläche (211), die sich zwischen der Außenwand (212) und der Innenrippe (213) befindet, aufweist, die eingerichtet sind, um als Führungsmittel für den Deckel (300) zu dienen und den Deckel (300) zu verschließen, indem sie einen Eingriff zwischen der Innenrippe (213) und den Führungs- und Anschlagsrippen (309) herstellen, wobei sich der Deckel (300) in einer zusammengebauten Konfiguration mit dem Behälter (200) zwischen der Führungsfläche (211) und den Deckelführungsvorsprüngen (208) befindet.

2. Kiste nach Anspruch 1, wobei die hintere Endkante (303) des Deckels (300) mit einer oder mehreren Rippen (308) versehen ist, die sich im Wesentlichen rechtwinklig zu und von der Oberfläche (301) aus nach oben in einer Richtung erstrecken, die der ersten und der zweiten Verschlusslasche (306, 307) entgegengesetzt ist, die eingerichtet sind, um den Deckel (300) zu stabilisieren, wenn er in den Behälter (200) eingesetzt wird, und um zu verhindern, dass Feuchtigkeit in das Innere der Kiste (10) eintritt.

3. Kiste nach Anspruch 2, wobei der Deckel (300) mit seiner asymmetrischen Form eingerichtet ist, um umgedreht zu werden und in Eingriff mit der Führungsfläche (211) eingesetzt zu werden, wobei sich die Rippe (308) an der hinteren Endkante (303) in die Deckelführungsnut (210) erstreckt, in einem Verschlusseingriff mit der Innenrippe (213) der Deckelführungsnut (210), wodurch in einer zusammengebauten Konfiguration eine Zugriffsöffnung (400) zwischen dem Deckel (300) und dem Behälter (200) freilegt wird.

4. Kiste nach einem der vorhergehenden Ansprüche, wobei der Boden (206) des Behälters (200) eine Stapelvertiefung (220, 220', 220") aufweist, die aus einer Durchgangsvertiefung in dem Boden (206) in einem Abstand von der hinteren Endwand (202) gebildet ist, der kleiner als der Abstand von der gegenüberliegenden vorderen Endwand (201) ist, wobei sich die Vertiefung (220, 220', 220") von der ersten Seitenwand (203) zu der zweiten Seitenwand (204) erstreckt, in einer Richtung, die dazu rechtwinklig ist, in einer Winkelvertiefung (220') in dem Boden (206) an der ersten Seitenwand (203) und einer ähnlichen Winkelvertiefung (220") an der zweiten Endwand (204) endet, wobei die Vertiefungen (220, 220', 220") eingerichtet sind, um eine obere Kante (217) der hinteren Endwand (202) und Ecken (218) zwischen der ersten und der zweiten Seitenwand (203, 204) und der hinteren Endwand (202) eines gestapelten zweiten Behälters (200c), der darunter eingerichtet ist, aufzunehmen, wodurch ein stabiler treppenartiger Stapel jeweils von zahlreichen Kisten (10a, 10b, 10c) oder Behältern (200a, 200b, 200c) gebildet wird.

5. Kiste nach einem der vorhergehenden Ansprüche, wobei der Handgriff (310), der Teil der jeweiligen Lasche (306, 307) ist, mit einer Verschlussstreifenvertiefung (312) versehen ist, die eingerichtet ist, um einen Verschlussstreifen aufzunehmen, und um zu verhindern, dass dieser aus dem Verschlusseingriff zwischen dem Deckel (300) und dem Behälter (200) herausrutscht.

6. Kiste nach einem der vorhergehenden Ansprüche, wobei der Deckel (300) eingerichtet ist, um umgekehrt in der Deckelführungsnut (210) montiert zu sein, wodurch ein offener Zwischenraum (400) vorne an der Kiste (10) bleibt, der Zugriff auf den Inhalt derselben in einer gestapelten Konfiguration gibt.

7. Kiste nach einem der vorhergehenden Ansprüche, wobei eine Stapelvertiefung (222) in dem Boden (206) des Behälters (200), die hier vorne an dem Behälter (200) eingerichtet ist, und eine entsprechende Stapelkerbe (223) in den oberen Kanten jeweils der ersten und der zweiten Seitenwand (203, 204) gebildet sind, die eingerichtet sind, um einen lösbaren Eingriff zwischen der Stapelkerbe (223) in einem ersten Behälter und einer Stapelvertiefung (222) eines zweiten Behälters (200), der direkt auf dem ersten Behälter gestapelt ist, herzustellen.

## Revendications

1. Boîte (10) pour stocker des articles et transporter des articles à la main, ladite boîte (10) comprenant
un contenant (200) carré ou rectangulaire ayant une paroi d'extrémité avant (201), une paroi d'extrémité arrière (202), une première paroi latérale (203), une seconde paroi latérale (204) et un fond (206), le contenant (200) présentant une poignée (207),
un couvercle (300) ayant une surface plane (301), deux bords latéraux (304, 305) parallèles mutuels, un bord d'extrémité arrière (303) et un côté avant (302) opposé au bord d'extrémité arrière (303), où
le couvercle (300) comprend en outre des première et seconde languettes (306, 307) de verrouillage, agencées pour établir une mise en prise de verrouillage libérable du couvercle (300) et du contenant (200), s'étendant sensiblement perpendiculairement à la surface (301) à une distance inférieure à la hauteur du contenant (200), définissant ainsi une forme asymétrique, lesdites languettes (306, 307) présentant un élément de préhension (310) et un trou (311) pour une bande de verrouillage,
lesdits bords latéraux (304, 305) présentant de nombreuses arêtes (309) de guidage et d'arrêt espacées uniformément le long des bords latéraux (305, 306) respectifs et présentant une longueur plus courte qu'un espace entre des saillies (208) de guidage de couvercle réparties uniformément le long d'un côté intérieur des première et seconde parois latérales (203, 204),
**caractérisée en ce qu'**un rebord supérieur de la paroi d'extrémité arrière (202), de la première paroi latérale (203) et de la seconde paroi latérale (204) présente une rainure (210) de guidage de couvercle définie par une paroi externe s'étendant verticalement vers l'extérieur jusqu'au côté intérieur duquel lesdites saillies (208) de guidage de couvercle sont formées, une arête interne (213) et une surface de guidage (211) horizontale située entre la paroi externe (212) et l'arête interne (213), agencée pour servir de moyen de guidage pour le couvercle (300) et pour verrouiller le couvercle (300) en établissant une mise en prise de l'arête interne (213) et des arêtes (309) de guidage et d'arrêt, dans laquelle le couvercle (300), dans une configuration assemblée avec le contenant (200), est situé entre la surface de guidage (211) et les saillies (208) de guidage de couvercle.

2. Boîte selon la revendication 1, dans laquelle le bord d'extrémité arrière (303) du couvercle (300) est pourvu d'une ou plusieurs arêtes (308) s'étendant sensiblement perpendiculairement à, et vers le haut à partir de, la surface (301) dans une direction opposée auxdites première et seconde languettes (306, 307) de verrouillage, agencées pour stabiliser le couvercle (300) lorsqu'il est inséré dans le contenant (200) et pour empêcher l'humidité de pénétrer à l'intérieur de la boîte (10).

3. Boîte selon la revendication 2, dans laquelle le couvercle (300) avec sa forme asymétrique est agencé pour être retourné et inséré en prise dans la surface de guidage (211), la nervure (308) au niveau du bord d'extrémité arrière (303) s'étendant dans la rainure (210) de guidage de couvercle, en prise de verrouillage avec l'arête interne (213) de la rainure (210) de guidage de couvercle, ainsi dans une configuration assemblée exposant une ouverture d'accès (400) entre le couvercle (300) et le contenant (200).

4. Boîte selon l'une quelconque des revendications précédentes, dans laquelle le fond (206) du contenant (200) présente un évidement d'empilage (220, 220', 220") formé d'un évidement traversant dans le fond (206) à une distance de la paroi d'extrémité arrière (202) qui est plus courte que la distance depuis la paroi d'extrémité avant (201) opposée, ledit évidement (220, 220', 220") s'étendant de la première paroi latérale (203) à la seconde paroi latérale (204), dans une direction perpendiculaire à celle-ci, se terminant par un évidement angulaire (220') dans le fond (206) au niveau de la première paroi latérale (203) et un évidement angulaire (220") similaire au niveau de la seconde paroi d'extrémité (204), lesdits évidements (220, 220', 220") étant agencés pour loger un bord supérieur (217) de la paroi d'extrémité arrière (202) et des coins (218) entre les première et seconde parois latérales (203, 204) et la paroi d'extrémité arrière (202), d'un deuxième contenant (200c) empilé disposé en dessous, formant ainsi une pile stable en forme d'escalier de nombreuses boîtes (10a, 10b, 10c) ou contenants (200a, 200b, 200c), respectivement.

5. Boîte selon l'une quelconque des revendications précédentes, dans laquelle la partie élément de préhension (310) de la languette (306, 307) respective est dotée d'un évidement (312) pour bande de verrouillage, agencé pour loger une bande de verrouillage et empêcher celle-ci de glisser hors de la mise en prise de verrouillage du couvercle (300) et du contenant (200).

6. Boîte selon l'une quelconque des revendications précédentes, dans laquelle le couvercle (300) est agencé pour être monté à l'envers dans la rainure (210) de guidage de couvercle, laissant ainsi un espace ouvert (400) à l'avant de la boîte (10) qui fournit un accès à son contenu dans une configuration empilée.

7. Boîte selon l'une quelconque des revendications précédentes, dans laquelle un évidement d'empilage (222) est formé dans le fond (206) du contenant (200), disposé ici à l'avant du contenant (200), et une encoche (223) d'empilage correspondante dans les bords supérieurs des première et seconde parois latérales (203, 204), respectivement, étant disposées pour établir une mise en prise libérable de l'encoche d'empilage (223) dans un premier contenant et de l'évidement d'empilage (222) d'un second contenant (200) empilé directement sur le premier contenant.
